# EUROPEAN PATENT SPECIFICATION

(11) **EP 2 177 678 B1**
(45) Date of publication and mention of the grant of the patent: **17.07.2019**
(21) Application number: 09173285.9
(22) Date of filing: 16.10.2009
(51) Int. Cl.: E03F 7/02, E03F 5/10, E03F 5/18, F16K 1/20, F16K 1/24

(54) **Pollution control valve, drainage system and method**
Verschmutzungskontrollventil, Abflusssystem und -verfahren
Vanne de contrôle de pollution, système de drainage et procédé

(30) Priority: 16.10.2008 GB 0818974
(43) Date of publication of application: 21.04.2010
(73) Proprietor: Environmental Innovations Limited, Stratford Upon Avon Warwickshire CV37 9DZ (GB)
(72) Inventor: Cole, David, Stratford Upon Avon, Warwickshire CV37 9 (GB)
(74) Representative: Gee, Steven William

(56) References cited:
- DE-A1- 3 437 000
- US-B1- 7 041 213

## Description

### FIELD OF THE INVENTION

This invention relates to a pollution control valve apparatus and in particular to a pollution control valve apparatus suitable for isolating an interceptor tank from the mains drainage system. The invention also relates to a drainage system incorporating the pollution control valve, and to a method of constructing a drainage system.

### BACKGROUND OF THE INVENTION

It is known to allow rainwater runoff to flow into the mains drainage system, and most buildings will have guttering, drainage pipes and/or drains which feed rainwater into a mains drain.

Commercial and industrial sites will have similar rainwater runoff systems, but it is a requirement that larger sites must utilise an interceptor tank in order to prevent oil or other pollutants which may be present on the site from being fed into the mains drainage system together with the rainwater. In the UK for example every commercial or industrial site employing more than 30 people is nowadays required to have an interceptor tank.

An interceptor tank is a large reservoir, typically located underground. The interceptor tank is typically located close to the inlet to the mains drainage system, and is fed by the drainage pipes of the site, so that all of the rainwater and other liquid runoff from the site must pass through the interceptor tank before it passes into the mains drainage system.

Most of the volume of the interceptor tank is located below the level of the mains drain, so that the interceptor tank is typically almost full of waste water. The interceptor tank therefore acts as a settlement tank allowing solids to fall to the bottom of the interceptor tank. In addition, the outlet for the interceptor tank is located close to the bottom of the tank (but not so close as to become blocked by solids) and any oil and grease in the waste water will float to the top of the interceptor tank and will not pass through the outlet.

The interceptor tank is periodically inspected and cleaned so that any oil and grease is removed from the top of the tank and any solids are removed from the bottom of the tank.

A stormwater pre-treatment and disposal system is disclosed in US Patent 7,041,213, the system including an interceptor tank which is provided to capture and store polluting materials such as oil which are present in the stormwater.

Notwithstanding the provision of an interceptor tank, many industrial sites are not able to discharge waste water into the mains drainage system. Thus, in the UK for example the Environment Agency provides discharge permits which are required by industrial and commercial sites before they can connect their drains to the mains drainage system. Without a discharge permit the site must treat its waste water as if it were industrial waste, and the cost of disposing of the waste water is therefore very expensive. The high cost must be borne whether the waste water is largely rainwater which is relatively clean, or largely waste water and other liquids generated by the site which are relatively dirty. Thus, without a discharge permit the owners or users of industrial sites face the prospect of having to pay a large charge for disposal of every cubic metre of waste water, even if all or substantially all of that water is rainwater.

It is therefore particularly desirable to obtain a discharge permit, and the owners and users of industrial and commercial sites will almost always seek to obtain a discharge permit if that is available.

Even with an interceptor tank the Environment Agency will not grant a discharge permit to many industrial and commercial sites, and will require those sites to take additional measures to prevent the introduction of pollutants into the mains drainage system. Sites handling chemicals for example must make special provisions to ensure that any accidental chemical spillages can be isolated and cannot enter into the mains drainage system.

Methods and apparatus to prevent chemical and the like spillages from entering the mains drainage system are known, and one such method and apparatus is described in GB patent application 2 331 796 . This document describes a valve comprising an inflatable bladder which can be used as an emergency valve in a drainage system to prevent the flow of polluting fluids such as oils or acids along a drainage pipe. The valve is located in the drainage pipe and in the case of a spillage of polluting fluids the bladder can be inflated to block the pipe, trapping the polluting fluids and allowing them to be safely removed from the site rather than being discharged into the mains drainage system.

Another pneumatically-actuated valve is described in DE 3 437 000. This valve incorporates a rigid valve member which pivots to a closed position under the influence of an inflatable member.

Some high risk industrial sites, such as those moving chemicals and the like, are required to take the most stringent measures to ensure that spillages cannot enter into the mains drainage system, and it has been determined that the provision of an emergency valve alone will not be sufficient to allow those sites to obtain a discharge permit. Accordingly, without some additional measures the owners or users of high risk sites must continue to dispose of all waste water as industrial waste, including rainwater runoff.

### SUMMARY OF THE INVENTION

There is therefore a desire to provide a method and apparatus which will satisfy the most stringent measures set by the Environment Agency so that even the most high risk sites can obtain a discharge permit and avoid the need to dispose of waste water as industrial waste.

The present invention is primarily directed to the high risk sites for which the most stringent pollution-prevention measures must be taken. For clarity, such a site is referred to herein as a "site handling polluting materials".

According to the present invention there is provided a pollution control valve apparatus including:
a valve for fitment into a drainage system, the valve having a housing with an inlet and an outlet, and a panel pivotably mounted within the housing, the panel being pivotable between a first position in which it closes off a conduit between the inlet and the outlet and a second position in which it does not close the conduit, the valve having an actuator which can move the panel to its closed position;
a control means to control the actuator; and
a pump to provide pressurised fluid to the actuator,
characterised by a fluid reservoir between the pump and the actuator.

A valve of the type described above is often called a "flap valve".

It is known that a flap valve is able to undertake many thousands of repeated opening and closing cycles. This is in stark contrast to a bladder valve such as that of GB 2 331 796 which can only undertake relatively few repeated cycles before the bladder needs to be replaced. Thus, whilst a bladder valve is suitable for emergency use when it might only need to be used once in a number of years, it is not suitable for applications in which it may be required to undertake many repeated cycles of opening and closing.

With a control valve apparatus according to the invention fitted into the drainage pipe either upstream or downstream (or both) of the interceptor tank, the valve can be closed each time the site handling polluting materials is in operation. In practical terms, therefore, the owner or operator of a site handling polluting materials can close the valve during the working day so that no waste water is discharged to the mains drainage system during the working day. The valve can be opened at the end of the working day (assuming that there have been no spillages during the day) allowing waste water which has built up in the drainage system to be safely discharged. It is expected that the ability to offer such a system and method of operation will allow even sites handling polluting materials to obtain a discharge perm it.

The above-described system and method relies upon the drainage pipes and/or interceptor tank (depending upon the location of the valve) to be able to store the waste water which accumulates during the day. It is preferred that the valve be located downstream of the interceptor tank so as to maximise the available storage volume, but in any event it is expected that the volume of the drainage pipes of most industrial sites will be able to accommodate at least one day's worth of waste water without adverse effect upon any part of the site. If, however, heavy rainfall occurs, then the volume of the drainage pipes and/or interceptor tank might be exceeded, but it is recognised that in heavy rainfall conditions most sites handling polluting materials will cease operation and the valve can be opened whilst the movement of chemicals and the like is suspended.

Preferably the actuator is a piston and cylinder assembly. Preferably also the piston is pneumatically operated. It is recognised that a pneumatic piston can be provided which is sufficiently airtight that the piston can remain actuated (and the valve closed) for long periods of time without requiring a constant air supply.

In the case of a pneumatically operated actuator the pump is a compressor.

The reservoir provides sufficient fluid for a number of operations of the actuator and therefore reduces the number of operations of the pump.

Desirably, the valve can include an overflow pipe connected to the outlet end of the valve. Accordingly, even if the valve is closed waste water can flow into the drainage system through the overflow pipe, so that ground level flooding is reduced or avoided. Such an embodiment may not be permitted at a site handling polluting materials, and at such a site it may be preferable to allow ground level flooding rather than allow the risk of pollutants entering into the mains drainage system. However, such an overflow system may be desirable when the valve is used in lower-risk applications.

### BRIEF DESCRIPTION OF THE PREFERRED EMBODIMENTS

The invention will now be described in more detail, by way of example, with reference to the accompanying drawings, in which:
Fig.1 shows a schematic representation of part of a drainage system of an industrial or commercial site having an interceptor tank and having two control valve apparatuses according to the present invention;
Fig.2 shows a side-sectional view and a plan view respectively of part of a control valve apparatus according to the present invention, the valve being closed;
Fig.3 shows a side-sectional view of the valve of Fig.2, the valve being open;
Fig.4 shows a schematic representation of a control valve apparatus according to the invention in use in a emergency response application; and
Fig.5 shows a schematic representation of a part of a control valve apparatus according to the invention having an overflow pipe.

### DETAILED DESCRIPTION

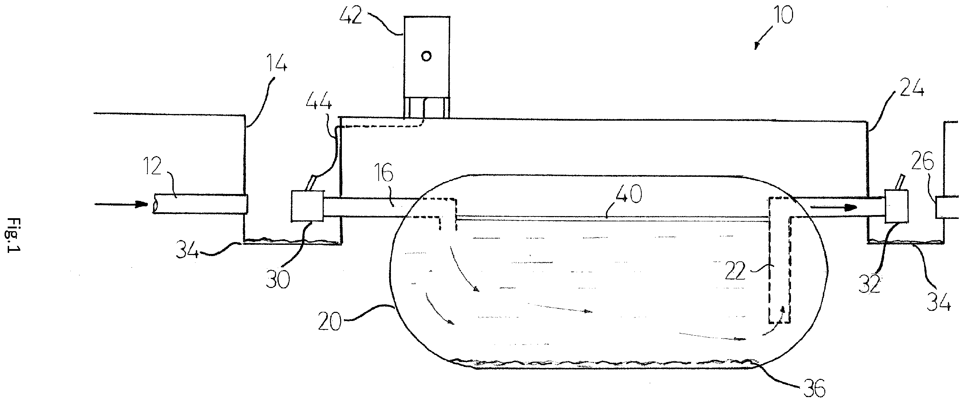

Fig.1 represents a part of a drainage system 10 of a typical site handling polluting materials for which the control valve apparatus of the present invention is particularly well suited. The site has a drainage system (not shown) delivering rainwater and other waste water into a number of drains which are all connected to a drainage pipe 12. The outlet of the drainage pipe 12 opens in a manhole 14 which also accommodates the inlet of another drainage pipe 16 which feeds into an interceptor tank 20.

The outlet of the interceptor tank 20 comprises a pipe 22 the outlet of which opens in a manhole 24 which also accommodates the inlet of another drainage pipe 26 which passes out of the site and feeds into the mains drainage system (not shown).

It will be understood that the manholes 14 and 24 are optional, and one or both of the manholes may be omitted in certain applications.

Fig.1 shows a first valve 30 located in the manhole 14, and a second valve 32 located in the manhole 24. Many applications of the present invention will incorporate only one of these valves, and if only one valve is used it will most preferably be located downstream of the interceptor tank as is the valve 32.

In addition to providing access to the valves 30 and 32, the manholes 14 and 24 provide silt traps in known fashion. Thus, in normal use the manholes 14 and 24 would be filled with water up to the level of the bottom of the respective outlet drainage pipes 16 and 26, and some or all of the solids in the waste water will drop to the bottom of the manhole as a layer of silt 34 which is removed during periodic cleaning.

As explained above, the interceptor tank provides another silt trap, and over time a layer of solids 36 builds up at the bottom of the interceptor tank 20. Also, a layer of oil and grease floats upon the water within the interceptor tank 20, and in particular well above the inlet to the pipe 22, so that the interceptor tank 20 provides a trap for oil and grease also. The layer 40 of oil and grease and the layer 36 of solids are periodically removed by way of an access opening (not shown) in the top of the interceptor tank 20.

The valve 30 is shown connected to its control means 42. A similar (or perhaps the same) control means is connected to the valve 32, but is not shown in Fig.1. In this embodiment the control means 42 is connected to the valve 30 by way of a pneumatic line 44, part of which runs underground in this embodiment. The control means 42 is located above ground, and can either be connected to mains electrical power, or can have solar panels and/or a wind-powered generator so as to provide the electricity required to power the control means.

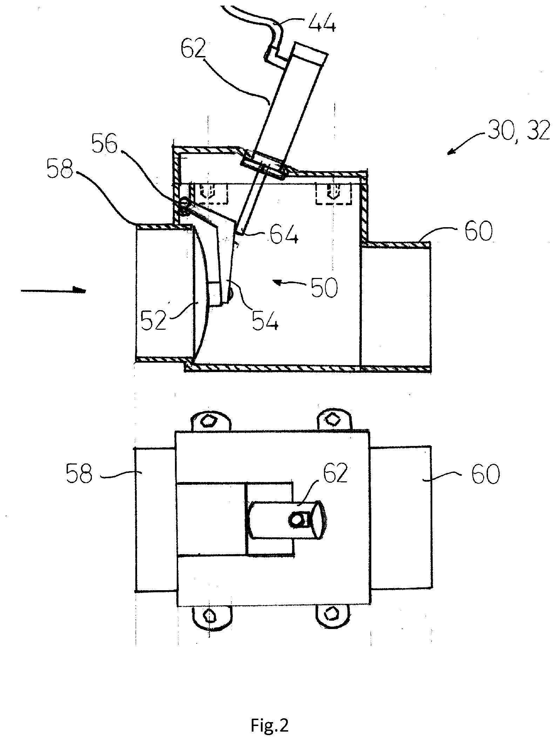

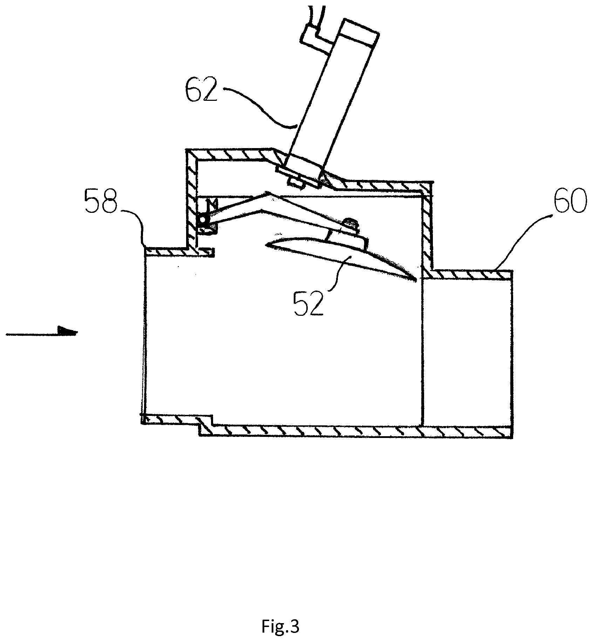

The valves 30 and 32 are shown schematically in Fig.1, but are shown in more detail in Figs. 2 and 3. The valves 30 and 32 each comprise a flap valve 50, i.e. a panel 52 which is mounted by way of an arm 54 upon a pivot 56. The panel 52 can therefore move between a closed position (Fig.2) in which the conduit between the inlet 58 and the outlet 60 is closed and sealed, and an open position (Fig.3) in which fluid can flow from the inlet 58 to the outlet 60.

In the arrangement shown in Fig.1 the inlet 58 of the valve 30 is open into the manhole 14 and the outlet 60 of the valve 30 is connected to the pipe 16. The inlet 58 of the valve 32 is connected to the pipe 22 and the outlet 60 of the valve 32 is open to the manhole 24. In such an arrangement, when the valves 30 and 32 are closed the interceptor tank 20 is sealed off and any waste water contained therein cannot pass into either of the manholes 14 or 24, and thereby into the drainage pipes 12 or 26.

Arranged in this way, the valves 30 and 32 play no part in preventing the flow of flood water into the mains drainage system. Thus, in flood conditions water flowing along the drainage pipe 12 can fill up the manhole 14, flow along the ground surface, enter the manhole 24 and flow along the drainage pipe 26. Provided that the site has in place arrangements to cease operation during times of flooding, so that no spillages can occur at these times, then the discharge of flood water in this way should be acceptable to the Environment Agency.

In alternative arrangements one or other of the vales 30 and 32 is omitted, or the inlet 58 of the valve 30 is connected to the outlet of the drainage pipe 12, and/or the outlet 60 of the valve 32 is connected to the drainage pipe 26. In some embodiments the manholes 14 and 24 do not serve as silt traps and instead the inlet 58 and outlet 60 of each of the valves 30 and 32 are connected to the respective pipes.

The valves 30 and 32 each have an actuator 62 which in this embodiment is a pneumatically-operated piston and cylinder assembly. As shown in Fig.2 the free end 64 of the piston can engage the pivot arm 54 of the flap valve 50 to drive the flap valve to its closed position. In this embodiment the free end 64 of the piston is not connected to the pivot arm 54 and slides along a part of the pivot arm during actuation of the valve. This avoids the requirement for the piston and/or actuator 62 to pivot or otherwise move during actuation of the valve so as to accommodate the arcuate movement of the panel 52 and pivot arm 54. In other embodiments the end 64 of the piston can be connected directly to the pivot arm 54, or indirectly connected to the pivot arm by way of an intermediate link, if desired.

Though not shown in the drawings, the flap valve 50 is resiliently biased towards its open position, i.e. into the position of Fig.3. Accordingly, the actuator 62 is not required to drive the valve to its open position. In less desirable embodiments the flap valve is not resiliently biased and instead relies upon the pressure of water at its inlet 58 to open the valve. It is preferred, however, to have the flap valve positively closed by actuation of the piston and positively opened by the resilient bias when the piston is released. Clearly, the resilient bias must be strong enough to drive back the piston once the air pressure has been released and also to lift the panel 52.

The control means 42 includes a compressor to provide the compressed air to move the piston. In preferred embodiments there is also a reservoir located between the compressor and the air line 44, the reservoir having sufficient volume to drive many actuations of the piston. The provision of a reservoir reduces the number of operating cycles of the compressor so extending the lifetime of the compressor and reducing its energy consumption. In one particular embodiment the reservoir holds enough compressed air for 100 actuation cycles of the piston, and since the control means actuates the compressor only when the reservoir is almost empty the compressor is required to operate once for each 90 or so cycles of the piston.

In this embodiment the control means 42 is not connected to the mains electrical supply, but has solar panels and a storage battery (not shown). The solar panels provide a trickle of electricity during daylight hours, which electricity is stored in the battery, and which can drive the compressor when required.

The control means can incorporate a remote detector such as an IR sensor or radio-wave receiver, and can therefore receive signals to actuate the piston and release the piston from a remote location. Alternatively, the control means has a switch which can be moved by an operator to cause the piston to be actuated or released.

In use at a site handling polluting materials it may be arranged that the valves 30 and 32 are both closed at the commencement of each working day and are only opened at the end of a working day. It will be understood that in the arrangement shown in Fig.1 the valves 30 and 32 do not need to be opened during flood conditions, but if only the valve 32 is used, and/or the inlet of the valve 30 is connected to the drainage pipe 12, then the valve(s) can be opened during flood conditions also, provided that operation of the site has been suspended and no spillages can occur.

Whilst the valves 30 and 32 remain closed no waste water is discharged along the drainage pipe 26 and if it is arranged that the valves 30 and 32 are only opened if no spillages have occurred then the arrangement provides a secure system which should satisfy the requirements for a discharge permit, even for the sites handling polluting materials. Because the valves 30 and 32 can be closed at the start of the working day they are not required to be closed in an emergency (such as a chemical spill), and the site can be maintained in a discharge-free (safe) state during operation.

Such a method of operation requires a reliable valve, and as above indicated a flap valve is known to the able to undertake many thousands of opening and closing cycles without failure. The valve could therefore be used for many years without requiring replacement of the seals. It has been found that the valve can be based upon a non-return valve designed for fitment into a drainage pipe, specifically a "REDI" non-return valve provided by Mission Rubber UK Limited (www.missionrubber.co.uk). Such valves comprise the housing within which the pivoting panel is located, and can be modified by the addition of a suitable actuator.

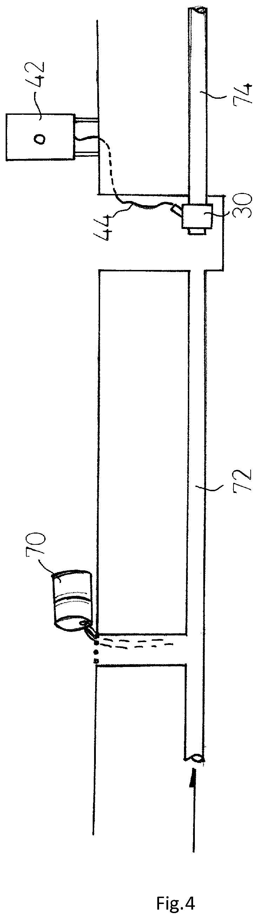

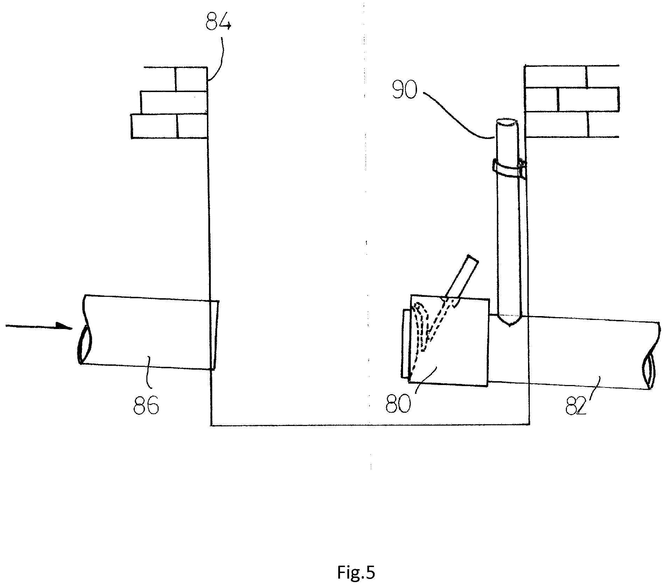

Figs. 4 and 5 demonstrate other possible applications of the invented valve. In Fig.4 the valve 30 is used as an emergency valve in the event of the spillage of the contents of barrel 70 into the drainage pipe 72 of a site. The outlet of the valve 30 is connected to the drainage pipe 74 which feeds into the mains drainage system, and when a spillage occurs the actuator of the valve 30 can be operated so as to close off the drainage pipe 74 until the spillage is cleared.

In Fig.5 the outlet of a valve 80 (which is connected to a control means 42 by way of a pneumatic line 44 - not shown) is connected to a drainage pipe 82. The valve 80 is located in a manhole 84 in which is also located the outlet of a drainage pipe 86. The valve 80 may be connected to a part of a drainage system of an industrial site, and could for example have its outlet connected to the drain pipe 26 of Fig.1, or to the drainage pipe 74 of Fig.4.

The valve 80 differs from the valves 30 and 32 in that it incorporates an overflow pipe 90. The overflow pipe 90 is an open pipe which feeds into the drainage pipe 82 downstream of the valve 80 (in preferred embodiments the overflow pipe is connected to the housing of the valve itself, usefully adjacent to its outlet). In the event of a spillage the valve 80 is closed, but in some low-risk applications where the spillage will not be particularly polluting or dangerous it is preferable to allow the spillage to flow into the mains drainage system rather than to flood all or part of the site. Accordingly, when the valve 80 is closed the water level in the manhole will rise until it reaches the top of the overflow pipe 90. The water will then flow into the overflow pipe 90 and along the drainage pipe 82 rather than continuing to build up and overflowing the manhole 84 and flooding the ground.

## Claims

1. A pollution control valve apparatus including:
a valve (30, 32) for fitment into a drainage system (10), the valve having a housing with an inlet (58) and an outlet (60), and a panel (52) pivotably mounted within the housing, the panel being pivotable between a first position in which it closes a conduit between the inlet and the outlet and a second position in which it does not close the conduit, the valve having an actuator (62) which can move the panel to its closed position;
a control means (42) to control the actuator; and
a pump to provide pressurised fluid to the actuator,
**characterised by** a fluid reservoir between the pump and the actuator.

2. A pollution control valve apparatus according to claim 1 in which the actuator is a piston and cylinder assembly.

3. A pollution control valve apparatus according to claim 2 in which the piston is pneumatically operated.

4. A pollution control valve apparatus according to any preceding claim in which a resilient biasing means is provided to move the panel to its open position.

5. A pollution control valve apparatus according to any preceding claim having an overflow pipe connected to the outlet (60).

6. A drainage system (10) comprising:
a first drainage pipe (12);
a second drainage pipe (26);
an interceptor tank (20) located between the first and second drainage pipes;
at least one pollution control valve (30, 32) located between the first drainage pipe and the interceptor tank and/or between the interceptor tank and the second drainage pipe, the valve(s) having a housing with an inlet (58) and an outlet (60), and a panel (52) pivotably mounted within the housing, the panel being pivotable between a first position in which it closes a conduit between the inlet and the outlet and a second position in which it does not close the conduit, the valve having an actuator (62) which can move the panel to its closed position;
a control means (42) to control the actuator; and
a pump to provide pressurised fluid to the actuator,
**characterised by** a fluid reservoir between the pump and the actuator.

7. A drainage system according to claim 6 in which the interceptor tank has an inlet pipe (16) and an outlet pipe (22), and in which at least one valve (31, 32) is connected to one or both of the inlet pipe and the outlet pipe.

8. A drainage system according to claim 7 in which the first drainage pipe (12) is in communication with the inlet pipe (16) by way of a first silt trap (14), and in which the outlet pipe (22) is in communication with the second drainage pipe (26) by way of a second silt trap (24).

9. A method of constructing a drainage system for a site handing polluting materials, comprising the steps of:
providing a first drainage pipe (12) at the site and connecting the first drainage pipe to a waste water collector of the site;
providing a second drainage pipe (26) at the site and connecting the second drainage pipe to an outlet drain;
providing an interceptor tank (20) between the first and second drainage pipes; and
providing at least one pollution control valve (30, 32) between the first drainage pipe and the interceptor tank and/or between the interceptor tank and the second drainage pipe, the valve(s) having a housing with an inlet (58) and an outlet (60), and a panel (52) pivotably mounted within the housing, the panel being pivotable between a first position in which it closes a conduit between the inlet and the outlet and a second position in which it does not close the conduit, the valve having an actuator (62) which can move the flap valve to its closed position, and a control means (42) to control the actuator.

10. The method according to claim 9 in which the interceptor tank is fitted with an inlet pipe (16) and an outlet pipe (22), the method including the additional steps of constructing a first silt trap (14) between the first drainage pipe (12) and the inlet pipe (16) and/or a second silt trap (24) between the outlet pipe (22) and the second drainage pipe (26), the pipes opening into the respective silt trap.

## Patentansprüche

1. Verschmutzungskontrollventilvorrichtung mit:
ein Ventil (30, 32) zum Einbau in ein Entwässerungssystem (10), wobei das Ventil ein Gehäuse mit einem Einlass (58) und einem Auslass (60) und eine Platte (52) aufweist, die schwenkbar innerhalb des Gehäuses montiert ist, wobei die Platte zwischen einer ersten Position, in der sie eine Leitung zwischen dem Einlass und dem Auslass schließt, und einer zweiten Position, in der sie die Leitung nicht schließt, schwenkbar ist, wobei das Ventil ein Stellglied (62) aufweist, das die Platte in ihre geschlossene Position bewegen kann;
ein Steuermittel (42) zum Steuern des Stellglieds; und
eine Pumpe, um dem Stellglied ein unter Druck stehendes Fluid zuzuführen,
**gekennzeichnet durch** einen Fluidspeicher zwischen der Pumpe und dem Stellglied.

2. Verschmutzungskontrollventilvorrichtung nach Anspruch 1, bei der das Stellglied eine Kolben-Zylinder-Anordnung ist.

3. Verschmutzungskontrollventilvorrichtung nach Anspruch 2, bei der der Kolben pneumatisch betätigt wird.

4. Verschmutzungskontrollventilvorrichtung nach einem der vorhergehenden Ansprüche, bei der ein elastisches Vorspannelement vorgesehen ist, um die Platte in ihre geöffnete Position zu bewegen.

5. Verschmutzungskontrollventilvorrichtung nach einem der vorhergehenden Ansprüche mit einer Überlaufleitung, die mit dem Auslass (60) verbunden ist.

6. Entwässerungssystem (10), umfassend:
eine erste Entwässerungsleitung (12);
eine zweite Entwässerungsleitung (26);
einen Auffangbehälter (20), der zwischen der ersten und zweiten Entwässerungsleitung angeordnet ist;
mindestens ein Verschmutzungskontrollventil (30, 32), das zwischen der ersten Entwässerungsleitung und dem Auffangbehälter und/oder zwischen dem Auffangbehälter und der zweiten Entwässerungsleitung angeordnet ist, das/die Ventil(e) mit einem Gehäuse mit einem Einlass (58) und einem Auslass (60) und einer innerhalb des Gehäuses schwenkbar montierten Platte (52), wobei die Platte zwischen einer ersten Position, in der sie eine Leitung zwischen dem Einlass und dem Auslass schließt, und einer zweiten Position, in der sie die Leitung nicht schließt, schwenkbar ist, wobei das Ventil ein Stellglied (62) aufweist, das die Platte in ihre geschlossene Position bewegen kann;
ein Steuermittel (42) zum Steuern des Stellglieds; und
eine Pumpe, um dem Stellglied ein unter Druck stehendes Fluid zuzuführen, **gekennzeichnet durch** einen Fluidspeicher zwischen der Pumpe und dem Stellglied.

7. Entwässerungssystem nach Anspruch 6, bei dem der Auffangbehälter eine Einlassleitung (16) und eine Auslassleitung (22) aufweist und bei dem mindestens ein Ventil (31, 32) mit einer oder beiden der Einlassleitung und der Auslassleitung verbunden ist.

8. Entwässerungssystem nach Anspruch 7, bei dem die erste Entwässerungsleitung (12) über einen ersten Schlammfang (14) mit der Einlassleitung (16) in Verbindung steht und bei dem die Auslassleitung (22) über einen zweiten Schlammfang (24) mit der zweiten Entwässerungsleitung (26) in Verbindung steht.

9. Verfahren zum Aufbauen eines Entwässerungssystems für einen Standort, der mit umweltschädlichen Materialien arbeitet, umfassend die Schritte von:
Bereitstellen einer ersten Entwässerungsleitung (12) am Standort und Verbinden der ersten Entwässerungsleitung mit einem Abwassersammler der Standort;
Bereitstellen einer zweiten Entwässerungsleitung (26) am Standort und Verbinden der zweiten Entwässerungsleitung mit einem Auslaufabfluss;
Bereitstellen eines Auffangbehälters (20) zwischen der ersten und zweiten Entwässerungsleitung; und
Bereitstellen mindestens eines Verschmutzungsbekämpfungsventils (30, 32) zwischen der ersten Entwässerungsleitung und dem Auffangbehälter und/oder zwischen dem Auffangbehälter und der zweiten Entwässerungsleitung, wobei das/die Ventil(e) ein Gehäuse mit einem Einlass (58) und einem Auslass (60) und eine Platte (52) aufweist/aufweisen, die schwenkbar innerhalb des Gehäuses montiert ist, wobei die Platte zwischen einer ersten Position, in der sie eine Leitung zwischen dem Einlass und dem Auslass schließt, und einer zweite Position, in der sie die Leitung nicht schließt, schwenkbar ist, wobei das Ventil ein Stellglied (62) aufweist, das das Klappenventil in seine geschlossene Position bewegen kann, und ein Steuermittel (42) zum Steuern des Stellglieds.

10. Verfahren nach Anspruch 9, bei dem der Auffangbehälter mit einer Einlassleitung (16) und einer Auslassleitung (22) versehen ist, wobei das Verfahren die zusätzlichen Schritte des Aufbaus eines ersten Schlammfangs (14) zwischen der ersten Entwässerungsleitung (12) und der Einlassleitung (16) und/oder eines zweiten Schlammfangs (24) zwischen der Auslassleitung (22) und der zweiten Entwässerungsleitung (26) beinhaltet, wobei die Leitungen in den jeweiligen Schlammfang münden.

## Revendications

1. Un dispositif de soupape antipollution comprenant:
une soupape (30, 32) destinée à être montée dans un système de drainage (10), la soupape ayant un boîtier avec une entrée (58) et une sortie (60), et un panneau (52) monté pivotant dans le boîtier, le panneau pouvant pivoter entre une première position dans laquelle il ferme un conduit entre l'entrée et la sortie et une deuxième position dans laquelle il ne ferme pas le conduit, la soupape ayant un actionneur (62) qui peut déplacer le panneau à sa position fermée;
un moyen de commande (42) pour commander l'actionneur; et
une pompe pour fournir du fluide sous pression à l'actionneur,
**caractérisée par** un réservoir de fluide entre la pompe et l'actionneur.

2. Un dispositif de soupape antipollution selon la revendication 1, dans lequel l'actionneur est un ensemble piston-cylindre.

3. Un dispositif de soupape antipollution selon la revendication 2, dans lequel le piston est actionné pneumatiquement.

4. Un dispositif de soupape antipollution selon n'importe quelle des revendications précédentes dans lequel un moyen de précontrainte élastique est prévu pour déplacer le panneau dans sa position ouverte.

5. Un dispositif de soupape antipollution selon n'importe quelle des revendications précédentes ayant un tuyau de trop-plein raccordée à la sortie (60).

6. Système de drainage (10) comprenant:
un premier tuyau de drainage (12);
un deuxième tuyau de drainage (26);
un réservoir d'interception (20) situé entre le premier et deuxième tuyau de drainage;
au moins une soupape antipollution (30, 32) située entre le premier tuyau de drainage et le réservoir d'interception et/ou entre le réservoir d'interception et le deuxième tuyau de drainage, la ou les soupape(s) ayant un boîtier avec une entrée (58) et une sortie (60), et un panneau (52) monté pivotant dans le boîtier, le panneau pouvant pivoter entre une première position dans laquelle il ferme un conduit entre l'entrée et la sortie et une deuxième position dans laquelle il ne ferme pas le conduit, la soupape ayant un actionneur (62) pouvant déplacer le panneau dans sa position fermée;
un moyen de commande (42) pour commander l'actionneur; et
une pompe pour fournir du fluide sous pression à l'actionneur, **caractérisée par** un réservoir de fluide entre la pompe et l'actionneur.

7. Un système de drainage selon la revendication 6, dans lequel le réservoir d'interception comporte un tuyau d'entrée (16) et un tuyau de sortie (22), et dans lequel au moins une soupape (31, 32) est reliée à l'un ou aux deux tuyaux d'entrée et de sortie.

8. Un système de drainage selon la revendication 7, dans lequel le premier tuyau de drainage (12) est en communication avec le tuyau d'entrée (16) au moyen d'un premier piège à sédiments (14), et dans lequel le tuyau de sortie (22) est en communication avec le deuxième tuyau de drainage (26) au moyen d'un deuxième piège à sédiments (24).

9. Procédé de construction d'un système de drainage pour un site manipulant des matériaux polluants, comprenant les étapes consistant à:
prévoir un premier tuyau de drainage (12) sur le site et raccorder le premier tuyau de drainage à un collecteur d'eaux usées du site;
prévoir un deuxième tuyau de drainage (26) sur le site et raccorder le deuxième tuyau de drainage à un drain de sortie;
prévoir un réservoir d'interception (20) entre le premier et le deuxième tuyau de drainage; et
prévoir au moins une soupape antipollution (30, 32) entre le premier tuyau de drainage et le réservoir d'interception et/ou entre le réservoir d'interception et le deuxième tuyau de drainage, la ou les soupape(s) ayant un boîtier avec une entrée (58) et une sortie (60), et un panneau (52) monté de manière pivotante dans le boîtier, le panneau pouvant pivoter entre une première position dans laquelle il ferme un conduit entre l'entrée et la sortie et une deuxième position dans laquelle il ne ferme pas le conduit, la soupape ayant un actionneur (62) qui peut déplacer la soupape à clapet dans sa position fermée, et un moyen de commande (42) pour commander l'actionneur.

10. Le procédé selon la revendication 9 dans lequel le réservoir d'interception est équipé d'un tuyau d'entrée (16) et d'un tuyau de sortie (22), le procédé comprenant les étapes supplémentaires de construction d'un premier piège à sédiments (14) entre le premier tuyau de drainage (12) et le tuyau d'entrée (16) et/ou un deuxième piège à sédiments (24) entre le tuyau de sortie (22) et le deuxième tuyau de drainage (26), les tuyaux ouvrant sur le piège à sédiments correspondant.
